# NEUE EUROPÄISCHE PATENTSCHRIFT

(11) **EP 2 865 861 B2**
(45) Veröffentlichungstag und Bekanntmachung des Hinweises auf die Entscheidung über den Einspruch: **15.05.2019**
(45) Hinweis auf die Patenterteilung: 27.04.2016
(21) Anmeldenummer: 14174380.7
(22) Anmeldetag: 26.06.2014
(51) Int. Cl.: F01N 3/28, F01N 3/20

(54) **Kataylsatoranordnung mit Injektionsabschnitt**
Catalyst assembly with injection section
Système de catalyseur avec section d'injection

(30) Priorität: 22.10.2013 DE 102013221428; 12.11.2013 DE 102013223033
(43) Veröffentlichungstag der Anmeldung: 29.04.2015
(73) Patentinhaber: Eberspächer Exhaust Technology GmbH & Co. KG, 66539 Neunkirchen (DE)
(72) Erfinder: Ferront, Hervé, 73728 Esslingen am Neckar (DE); Cazeneuve, Laurent, 78690 St Rémy l´Honoré (FR); Többen, Dr., Heike, 73066 Uhingen (DE); Rilly, Sophie, 92130 Issy les Moulineaux (FR); Wolf, Tobias, 73257 Köngen (DE); Kermorvant, Sophie, 91300 Massy (FR)
(74) Vertreter: BRP Renaud & Partner mbB Rechtsanwälte Patentanwälte Steuerberater

(56) Entgegenhaltungen:
- WO-A1-2010/146285
- WO-A1-2011/087527
- DE-A1-102006 059 761
- DE-A1-102007 005 285
- DE-A1-102008 053 669
- DE-A1-102009 036 511
- DE-U1-202007 010 324
- JP-A- 2009 216 074
- US-A1- 2012 144 812

## Beschreibung

Die vorliegende Erfindung betrifft einen Injektionsabschnitt einer Abgasanlage für eine Brennkraftmaschine. Die Erfindung betrifft außerdem eine mit einem derartigen Injektionsabschnitt ausgestattete Katalysatoranlage für eine Abgasanlage einer Brennkraftmaschine.

Aus der WO 2010/146285 A1 ist eine Katalysatoranordnung bekannt, die ein rohrförmiges Gehäuse zum Führen einer Abgasströmung umfasst, das in einem Auslassabschnitt einen SCR-Katalysator enthält, wobei SCR für Selektive Catalytic Reduction steht. Das Gehäuse weist außerdem einen Einlassabschnitt auf, der bezüglich der Abgasströmung stromauf des Auslassabschnitts angeordnet ist und der einen Oxidationskatalysator enthält. Axial zwischen dem Einlassabschnitt und dem Auslassabschnitt ist ein Injektionsabschnitt angeordnet, wobei ein integral am Einlassabschnitt ausgebildeter weiterer Gehäuseabschnitt einen Kanal des Injektionsabschnitts definiert, der ebenfalls zum Führen der Abgasströmung dient. Im Injektionsabschnitt ist seitlich am Kanal ein Injektoranschluss angeordnet, an den ein Injektor zum seitlichen Einspritzen oder Eindüsen einer Flüssigkeit bzw. eines Gases in die Abgasströmung angeschlossen ist. Hierdurch wird eine seitliche Einspritzung der Flüssigkeit bewirkt, also eine Einspritzung, bei der eine Haupteinspritzrichtung gegenüber einer Axialrichtung des Kanals geneigt ist, vorzugsweise in einem Winkelbereich von 60° bis 120°, insbesondere in einem Winkelbereich von 85° bis 95° und zweckmäßig um etwa 90°. Im Kanal der Injektionskammer ist im Bereich des Injektoranschlusses eine Injektionskammer ausgebildet, die einerseits durch eine bezüglich der Abgasströmung stromauf des Injektoranschlusses im Kanal angeordnete, perforierte und von der Abgasströmung durchströmbare erste Trennwand und andererseits durch eine bezüglich der Abgasströmung stromab des Injektionsanschlusses im Kanal angeordnete, perforierte und von der Abgasströmung durchströmbare zweite Trennwand begrenzt ist. Bei der bekannten Katalysatoranordnung sind die beiden Trennwände in Verbindung mit ihren Perforationen so ausgestaltet bzw. geformt, dass sich im Betrieb der Abgasanlage in der Injektionskammer eine Drall- bzw. Wirbel bzw. Rotationsströmung entsteht, bei der die gesamte Abgasströmung um die Längsmittelachse des Kanals rotiert. Hierdurch wird erreicht, dass ein Strömungspfad in der Injektionskammer, dem die Abgasströmung von der ersten Trennwand bis zur zweiten Trennwand folgt, um wenigstens 20% länger ist als ein Axialabstand zwischen Einlassabschnitt und Auslassabschnitt. Hierdurch wird eine Mischstrecke geschaffen, in der die eingespritzte Flüssigkeit verdampfen und sich mit der Abgasströmung durchmischen kann.

Bei einem SCR-System handelt es sich bei der eingespritzten Flüssigkeit um ein Reduktionsmittel. Bevorzugt wird hierbei derzeit eine wässrige Harnstofflösung, die mittels Thermolyse und Hydrolyse letztlich zu Ammoniak und Kohlendioxid umgewandelt wird, um im SCR-Katalysator angelagerte Stickoxide in Stickstoff und Wasser umzuwandeln. Von entscheidender Bedeutung für die Effizienz eines derartigen SCR-Systems ist einerseits eine möglichst vollständige Verdampfung des in flüssiger Form eingebrachten Reduktionsmittels. Andererseits muss auch eine möglichst intensive Durchmischung des verdampften Reduktionsmittels mit dem Abgasstrom erzielt werden.

Alternativ kann bei modernen SCR-Systemen auch ein gasförmiges Reduktionsmittel eingedüst werden, bei dem es sich beispielsweise um gasförmiges Ammoniak handelt. Die Bevorratung kann in diesem Fall in Form von Feststoffkörpern erfolgen, die mittels, beispielsweise elektrisch zugeführter, Wärme verdampft werden, um das gasförmige Ammoniak zu generieren. Bei diesen sogenanten Amminex-Systemen steht das Ammoniak somit im Abgasstrom unmittelbar zur Verfügung, so dass es nur noch auf eine intensive Durchmischung mit dem Abgasstrom ankommt, da die Verdampfung bereits im Vorfeld, außerhalb des Abgasstroms erfolgt.

Die vorliegende Erfindung beschäftigt sich mit dem Problem, für einen Injektionsabschnitt der vorstehend genannten Art bzw. für eine damit ausgestattete Katalysatoranordnung sowie für ein Verfahren zum Einbringen einer Flüssigkeit in eine Abgasströmung eine verbesserte Ausführungsform anzugeben, die sich insbesondere durch eine effiziente Verdampfungswirkung und Durchmischung für die eingespritzte Flüssigkeit mit der Abgasströmung auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, im Injektionsraum zwei gegenläufige Strömungswirbel, die jeweils mit Hilfe eines Abgasteilstroms gebildet werden, zu erzeugen. Die beiden Strömungswirbel werden dabei im Injektionsraum so generiert, dass die beiden Abgasteilströme proximal zu einer den Injektionsraum seitlich begrenzenden Kanalwand separat strömen und distal zur Kanalwand gemeinsam bzw. vereint strömen. In dieses System gegenläufiger Strömungswirbel wird die Flüssigkeit bzw. das Gas seitlich eingespritzt bzw. eingedüst, wodurch sich eine intensive Durchmischung zwischen Reduktionsmittel und Abgas ergibt und bei einem flüssigen Reduktionsmittel außerdem eine effiziente Verdampfung der Flüssigkeit einstellt. Die Strömungswirbel führen einerseits zu einer gezielten Turbulenz innerhalb der Injektionskammer, was die Durchmischung zwischen eingebrachtem Reduktionsmittel und Abgasströmung verbessert. Andererseits verlängern die Strömungswirbel einen Abgaspfad, dem die Abgasströmung innerhalb der Injektionskammer folgt. Hierdurch wird somit die Verweildauer der Abgasströmung verlängert, wodurch mehr Zeit zum Verdampfen und/oder Durchmischen der eingespritzten Flüssigkeit bzw. des eingedüsten Gases zur Verfügung steht.

Konkret wird für den erfindungsgemäßen Injektionsabschnitt vorgeschlagen, eine Perforation der ersten Trennwand so auszugestalten, dass sie bei einer Durchströmung der ersten Trennwand innerhalb der Injektionskammer zumindest die beiden vorstehend genannten Abgasteilströme erzeugt, die zwei separate und gegenläufige Strömungswirbel ausbilden, derart, dass die beiden Teilströme entlang der Kanalwand separat strömen, also entlang separater Kanalwandabschnitte, während sie distal zur Kanalwand, also in einem mittleren Bereich der Injektionskammer, gemeinsam bzw. vereint strömen.

Unterstützt wird die Erzeugung eines derartigen Wirbelsystems durch eine im Wesentlichen zylindrische Formgebung für den Kanal, wodurch die Kanalwand in der Umfangsrichtung gekrümmt verläuft. Die Abgasteilströme strömen dadurch proximal zur Kanalwand entlang derselben auf einander zu, bis sie in einem Staubereich aufeinandertreffen und in das Innere der Injektionskammer abgelenkt werden, wo sie dann distal zur Kanalwand gemeinsam strömen. Ferner rotieren die Strömungswirbel bevorzugt um separate Wirbelachsen, die Parallel zur Längsmittelachse des Kanals verlaufen.

Bevorzugt ist eine Ausführungsform, bei der die Perforation der ersten Trennwand symmetrisch zu einer Längsmittelebene des Kanals ausgestaltet ist, so dass sich bei einer Durchströmung der ersten Trennwand die beiden Strömungswirbel symmetrisch zu besagter Längsmittelebene ausbilden können. Durch ein symmetrisches Wirbelsystem kann einem symmetrischen Einspritzstrahl Rechnung getragen werden, der sich mit Hilfe eines entsprechenden Injektors besonders einfach herstellen lässt.

Zweckmäßig ist der Injektoranschluss entsprechend einer Weiterbildung in dieser Längsmittelebene angeordnet. Im montierten Zustand liegt dann eine Haupteinspritzrichtung des Injektors in der Längsmittelebene. Durch eine derartige symmetrische Anordnung lässt sich die Effizienz der Verdampfung bzw. der Durchmischung verbessern.

Bei einer anderen Ausführungsform können die beiden Abgasteilströme proximal zur Kanalwand jeweils vom Injektoranschluss wegströmen, während distal zur Kanalwand gemeinsam auf den Injektoranschluss zuströmen. Das bedeutet, dass die vereinten Abgasteilströme im Zentrum der Injektionskammer dem Einspritzstrahl entgegenströmen, was die Durchmischung und gegebenenfalls die Verdampfung signifikant verbessert.

Erfindungsgemäß weist die Perforation der ersten Trennwand zum Erzeugen der Strömungswirbel Öffnungen auf, die proximal zur Kanalwand angeordnet sind und die in der Injektionskammer jeweils eine vom Injektoranschluss abgewandte Austrittsfläche besitzen. Diese Öffnungen können im Folgenden auch als erste Öffnungen der ersten Trennwand bezeichnet werden. Somit treten die separaten Abgasteilströme in einer vom Injektoranschluss abgewandten Richtung aus den ersten Öffnungen aus, wodurch bereits die Strömungsrichtung zum Induzieren der Strömungswirbel vorgegeben ist.

Erfindungsgemäß sind die Austrittsflächen mittels integraler Wandabschnitte der ersten Trennwand gebildet, die von der übrigen ersten Trennwand in die Injektionskammer vorstehen. Hierdurch sind die Austrittsflächen durch die vorstehenden Wandabschnitte gegenüber einem Einspritzstrahl abgeschirmt, so dass der Einspritzstrahl nicht durch die ersten Öffnungen hindurch aus der Injektionskammer austreten kann.

Erfindungsgemäß besitzen die ersten Öffnungen an einer vom Injektionsraum abgewandten Anströmseite der ersten Trennwand jeweils eine dem Injektoranschluss zugewandte Eintrittsfläche. Hierdurch wird erreicht, dass die Abgasteilströme nur in einer vom Injektoranschluss wegführenden Richtung durch die Eintrittsfläche in die jeweilige erste Öffnung einströmen können, wodurch eine zur Wirbelbildung benötigte bevorzugte Strömungsrichtung vorgegeben wird.

Erfindungsgemäß sind die Eintrittsflächen mittels integraler Wandabschnitte der ersten Trennwand gebildet, die an der Anströmseite von der übrigen ersten Trennwand abstehen. Die Wandabschnitte an den Eintrittsflächen und an den Austrittsflächen können eine Kanalisierung der durch sie hindurchtretenden Abgasteilströme erzeugen, was die Wirbelbildung unterstützt. Ferner sind die integralen Wandabschnitte besonders einfach aus einem ebenen Blechkörper ausgestellt, um dadurch gleichzeitig die gewünschten ersten Öffnungen zu bilden.

Die ersten Öffnungen der Perforation der ersten Trennwand sind zweckmäßig proximal zur Kanalwand in der ersten Trennwand ausgebildet. Dabei sind sie zweckmäßig in der Umfangsrichtung voneinander beabstandet.

Darüber hinaus kann die Perforation der ersten Trennwand gemäß einer anderen Ausführungsform mehrere weitere oder zweite Öffnungen aufweisen, die distal zur Kanalwand angeordnet sind. Die zweiten Öffnungen befinden sich somit zwischen den ersten Öffnungen. Diese anderen oder zweiten Öffnungen sind gezielt so gestaltet, dass sie in der Injektionskammer eine auf den Injektoranschluss zu strömende Gasströmung erzeugen. Hierzu können diese zweiten Öffnungen dem Injektoranschluss zugewandte Austrittsflächen und vom Injektoranschluss abgewandte Eintrittsflächen besitzen. Den zweiten Öffnungen können ferner integral an der ersten Trennwand ausgebildete Wandabschnitte zugeordnet sein, die in die Injektionskammer vorstehen, um beim Durchtritt durch die zweiten Öffnungen eine Umlenkung der im Wesentlichen axial ankommenden Abgasströmung in Richtung zum Injektoranschluss zu bewirken. Außerdem können Abschirmbleche vorgesehen sein, die ebenfalls in die Injektionskammer vorstehen und integral an der ersten Trennwand ausgebildet sind. Diese Abschirmbleche sind jedoch so angeordnet, dass sie den Injektionsstrahl daran hindern, direkt durch die zweiten Öffnungen aus der Injektionskammer auszutreten. Zweckmäßig können die zweiten Öffnungen in einer Injektionsrichtung, in welcher der Injektor in Betrieb die jeweilige Flüssigkeit hauptsächlich eindüst, hintereinander angeordnet sein. Diese weiteren oder zweiten Öffnungen unterstützen somit die Wirbelbildung in der Injektionskammer.

Bei einer anderen Ausführungsform kann vorgesehen sein, dass die Perforation der ersten Trennwand zum Erzeugen der Strömungswirbel außerdem andere (oder dritte) Öffnungen aufweist, die parallel zu einer Längsmittelachse des Kanals durchströmbar sind. Während die ersten Öffnungen und die gegebenenfalls vorhandenen weiteren oder zweiten Öffnungen jeweils nur geneigt zur Längsmittelachse des Kanals durchströmbar sind, um die Wirbelbildung zu erzwingen, können die bezüglich der Längsmittelachse axial durchströmbaren anderen oder dritten Öffnungen in der Injektionskammer axiale Teilströme generieren, die zur Stabilisierung der beiden Strömungswirbel beitragen.

Gemäß einer Weiterbildung können zumindest einige der anderen oder dritten Öffnungen zwischen den ersten Öffnungen und den zweiten Öffnungen angeordnet sein, wodurch die durch sie hindurch strömenden Teilströme die wandnahen Strömungsbereiche der beiden Wirbel von wandfernen, entgegengesetzt strömenden Strömungsbereichen der Wirbel separieren, was die beiden Wirbel stabilisiert.

Ferner kann gemäß einer anderen Weiterbildung vorgesehen sein, dass die anderen oder dritten Öffnungen in der Ebene der ersten Trennwand liegen. Bei einer ebenen ersten Trennwand und einer senkrecht zur Längsmittelachse des Kanals ausgerichteten ersten Trennwand ergibt sich durch diese Ausgestaltung selbsttätig eine axiale Durchströmung dieser anderen oder dritten Öffnungen, was deren Herstellung extrem vereinfacht.

Eine andere vorteilhafte Wieterbildung sieht vor, dass einige oder alle der anderen oder dritten Öffnungen in zwei separaten Bereichen angeordnet sind, durch die sich jeweils eine Wirbelachse erstreckt, um die der jeweilige Strömungswirbel rotiert. Somit befinden sich die mithilfe der anderen oder dritten Öffnungen generierten Teilströme im Zentrum oder Auge des jeweiligen Wirbels, um diesen zu stabilisieren. Die Strömungswirbel rotieren somit um die stabilisierenden axialen Teilströme.

Zusätzlich oder alternativ kann vorgesehen sein, dass einige der anderen oder dritten Öffnungen in einem zum Injektoranschluss proximalen Bereich angeordnet sind. Dort können die damit generierten Teilströme in der Injektionskammer die Aufteilung der Abgasströmung in zwei separate wandnahe Abgasteilströme zur Wirbelbildung unterstützen, indem sie die beiden Abgasteilströme voneinander wegtreiben.

Zusätzlich oder alternativ kann vorgesehen sein, dass einige der anderen oder dritten Öffnungen in einem zum Injektoranschluss distalen Bereich angeordnet sind. Dort können die damit generierten Teilströme in der Injektionskammer die aufeinander zu strömenden wandnahen Abgasteilströme getrennt halten, um deren wandferne Rückströmung zu unterstützen.

Des Weiteren kann bei einer anderen Ausführungsform vorgesehen sein, dass eine Perforation der zweiten Trennwand Öffnungen aufweist, die mit Leitflächen abgeschirmt sind, die in den Injektionsraum vorstehen. Durch die abgeschirmten Öffnungen wird eine direkte Durchströmung der zweiten Trennwand vermieden, da zusätzliche Strömungsumlenkungen erforderlich sind, die jeweils zur Durchmischung von verdampfter Flüssigkeit bzw. von Gas und Abgasströmung beitragen.

Gemäß einer Weiterbildung können die Öffnungen der Perforation der zweiten Trennwand erste Öffnungen aufweisen, die proximal zur Kanalwand angeordnet sind, die länglich sind, die sich im Wesentlichen in der Umfangsrichtung erstrecken und die nach radial innen durch die jeweilige Leitfläche abgeschirmt sind. Hierdurch wird erreicht, dass die proximal zur Kanalwand strömenden Bereiche der Strömungswirbel nicht direkt durch die ersten Öffnungen hindurchtreten können.

Bei einer anderen Weiterbildung können die Öffnungen der Perforation der zweiten Trennwand zweite Öffnungen aufweisen, die distal zur Kanalwand angeordnet sind und die zum Injektoranschluss mit der jeweiligen Leitfläche abgeschirmt sind. Darüber hinaus sind die zweiten Öffnungen bevorzugt ebenfalls länglich, wobei sie sich jedoch parallel zueinander erstrecken. Durch die Abschirmung der zweiten Öffnungen in Richtung zum Injektoranschluss kann die distal zur Kanalwand strömende gemeinsame Strömung der beiden Strömungswirbel besonders leicht durch diese zweiten Öffnungen hindurchtreten, was am Ende der Wirbelbewegung erwünscht ist und insgesamt den Durchströmungswiderstand des Injektionsabschnitts reduziert.

Die Abschirmung der Öffnungen der Perforation der zweiten Trennwand verhindert außerdem ein direktes Durchtreten des Einspritzstrahls durch die zweite Trennwand. Dies unterstützt die Verwirbelung und Durchmischung. Die Leitflächen können dabei insbesondere auch als Aufprallflächen dienen, auf die die eingespritzte Flüssigkeit auftreffen kann, was die Verdampfung der Flüssigkeit unterstützt.

Gemäß einer anderen vorteilhaften Ausführungsform kann sich die erste Trennwand im Wesentlichen senkrecht zu einer Längsmittelachse des Kanals erstrecken. Hierdurch baut der Injektionsabschnitt in der Axialrichtung vergleichsweise kompakt.

Bei einer anderen Ausführungsform kann die zweite Trennwand relativ zur ersten Trennwand geneigt sein, und zwar derart, dass sich die Injektionskammer mit zunehmendem Abstand vom Injektoranschluss verjüngt. Im Unterschied dazu weitet sich der Injektionsstrahl mit zunehmendem Abstand vom Injektoranschluss, insbesondere kegelförmig auf, wodurch sich insgesamt eine intensive Durchmischung und gegebenenfalls eine verbesserte Verdampfung einstellt.

Entsprechend einer besonders vorteilhaften Ausführungsform kann optional eine perforierte, von der Abgasströmung durchströmbare dritte Trennwand vorgesehen sein, die bezüglich der Abgasströmung stromab der zweiten Trennwand angeordnet ist. Diese zusätzliche dritte Trennwand kann einerseits dazu genutzt werden, die Gefahr eines Austritts unverdampfter Flüssigkeit aus dem Injektionsabschnitt zu reduzieren. Andererseits kann bei entsprechender Gestaltung einer Perforation der dritten Trennwand eine Strömungsberuhigung und Homogenisierung erzielt werden, was insbesondere innerhalb einer Katalysatoranordnung zu einer verbesserten Anströmung eines gegebenenfalls nachgeordneten Katalysators führt. Beispielsweise kann die dritte Trennwand durch ein einfaches Lochblech gebildet sein, bei dem eine Vielzahl vergleichsweise kleiner Durchtrittsöffnungen vorgesehen ist, die gleichförmig auf die gesamte Fläche der dritten Trennwand verteilt sind. Insbesondere sind bei der dritten Trennwand keine Leitflächen und dergleichen an den Öffnungen der Perforation vorgesehen. Alternativ kann auch die dritte Trennwand mit Leitflächen ausgestattet sein, um die Durchströmung der Perforation der dritten Trennwand gezielt zu führen. Zweckmäßig erstreckt sich die dritte Trennwand in einer Ebene, die senkrecht zur Längsmittelachse des Kanals verläuft. In dieser Ebene liegen dann auch die Durchtrittsöffnungen.

Eine erfindungsgemäße Katalysatoranordnung umfasst ein rohrförmiges Gehäuse zum Führen einer Abgasströmung, das in einem Auslassabschnitt einen SCR-Katalysator enthält. Ferner ist die Katalysatoranordnung mit einem Injektionsabschnitt der vorstehend beschriebenen Art ausgestattet, der bezüglich der Abgasströmung stromauf an den Auslassabschnitt anschließt. Der Injektionsabschnitt bildet dabei eine komplett vormontierbare separate Baugruppe, die an das Gehäuse der Katalysatoranordnung angebaut oder darin eingebaut werden kann. Beispielsweise kann der Kanal des Injektionsabschnitts in einen dafür vorgesehenen Gehäuseabschnitt des Gehäuses eingesetzt werden, so dass sich Gehäuse und Kanal axial überlappen und radial benachbart sind.

Bevorzugt ist jedoch eine Ausführungsform, bei welcher der Kanal des Injektionsabschnitts seinerseits einen separaten Abschnitt des Gehäuses der Katalysatoranordnung bildet. In diesem Fall schließen der Kanal und der Auslassabschnitt axial aneinander an.

Bei einer anderen Ausführungsform kann das Gehäuse einen Einlassabschnitt aufweisen, der bezüglich des Auslassabschnitts stromauf an den Injektionsabschnitt anschließt und der einen Oxidationskatalysator enthält. Bevorzugt ist auch hier eine Bauform, bei welcher das gemeinsame Gehäuse der Katalysatoranordnung zumindest drei Gehäuseabschnitte besitzt, die axial aneinander anschließen, nämlich den Einlassabschnitt und den Auslassabschnitt sowie den dazwischen angeordneten, durch den Kanal des Injektionsabschnitts gebildeten Gehäuseabschnitt.

Denkbar ist auch eine Ausführungsform, bei welcher der Kanal des Injektionsabschnitts einen anderen, vorzugsweise einen größeren, durchströmbaren Querschnitt besitzt als der Auslassabschnitt und/oder der Einlassabschnitt des Gehäuses. Hierdurch lassen sich die Wirbel mit besonders großen Durchmessern verwirklichen, was eine intensive Durchmischung begünstigt.

Ein Verfahren zum Einbringen einer Flüssigkeit oder eines Gases in eine Abgasströmung einer Brennkraftmaschine geht davon aus, dass eine Flüssigkeit bzw. ein Gas bezogen auf eine Abgasströmung seitlich in eine Injektionskammer eingespritzt bzw. eingedüst wird, durch welche die Abgasströmung hindurchströmt. In dieser Injektionskammer werden dann zwei gegenläufige Strömungswirbel erzeugt, die jeweils aus einem Abgasteilstrom bestehen. Die Strömungswirbel werden dabei so erzeugt, dass die beiden Abgasteilströme proximal zu einer die Injektionskammer seitlich begrenzenden Kanalwand separat und entlang der Kanalwand aufeinander zu strömen und distal zur Kanalwand gemeinsam und vereint strömen. Die Wirbel besitzen dadurch einen vergleichsweise großen Querschnitt, wodurch sie relativ viel kinetische Energie enthalten, was die Durchmischung verbessert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine isometrische Ansicht einer Katalysatoranordnung mit transparenten Komponenten,
- Fig. 2: eine isometrische Ansicht eines Injektionsabschnitts der Katalysatoranordnung, wobei jedoch nur Trennwände des Injektionsabschnitts dargestellt sind,
- Fig. 3: eine Seitenansicht des Injektionsabschnitts, wobei nur die Trennwände und ein Injektoranschluss dargestellt sind,
- Fig. 4: eine Axialansicht einer ersten Trennwand des Injektionsabschnitts mit Strömungspfeilen.

Entsprechend Fig. 1 umfasst eine Katalysatoranordnung 1, die für eine Verwendung in einer Abgasanlage einer Brennkraftmaschine, vorzugsweise eines Kraftfahrzeugs, vorgesehen ist, ein rohrförmiges, vorzugsweise zylindrisches Gehäuse 2, das zum Führen einer in Fig. 1 durch Pfeile angedeuteten Abgasströmung 3 dient. Das Gehäuse 2 besitzt einen Einlassabschnitt 4, einen Auslassabschnitt 5 und einen mittleren Gehäuseabschnitt 6, der bezüglich einer Längsmittelachse 7 des Gehäuses 2 axial zwischen dem Einlassabschnitt 4 und dem Auslassabschnitt 5 angeordnet ist. Der Einlassabschnitt 4 ist fluidisch mit einem Gehäuseeinlass 8 verbunden und enthält z.B. einen Oxidationskatalysator 9. Der Einlassabschnitt 4 könnte auch einen Mischer enthalten, beispielsweise um zusätzlich eingespritze bzw. eingedüste Kohlenwasserstoffe mit der Abgasströmung 3 zu durchmischen. Der Auslassabschnitt 5 ist fluidisch mit einem Gehäuseauslass 10 verbunden und enthält einen SCR-Katalysator 11. Im mittleren Gehäuseabschnitt 6 ist ein Injektionsabschnitt 12 ausgebildet, mit dessen Hilfe ein flüssiges Reduktionsmittel, vorzugsweise eine wässrige Harnstofflösung, oder ein gasförmiges Reduktionsmittel, vorzugsweise Ammoniakgas, stromauf des SCR-Katalysators 11 und stromab des Oxidationskatalysators 9 in das Gehäuse 2 eingebracht werden kann.

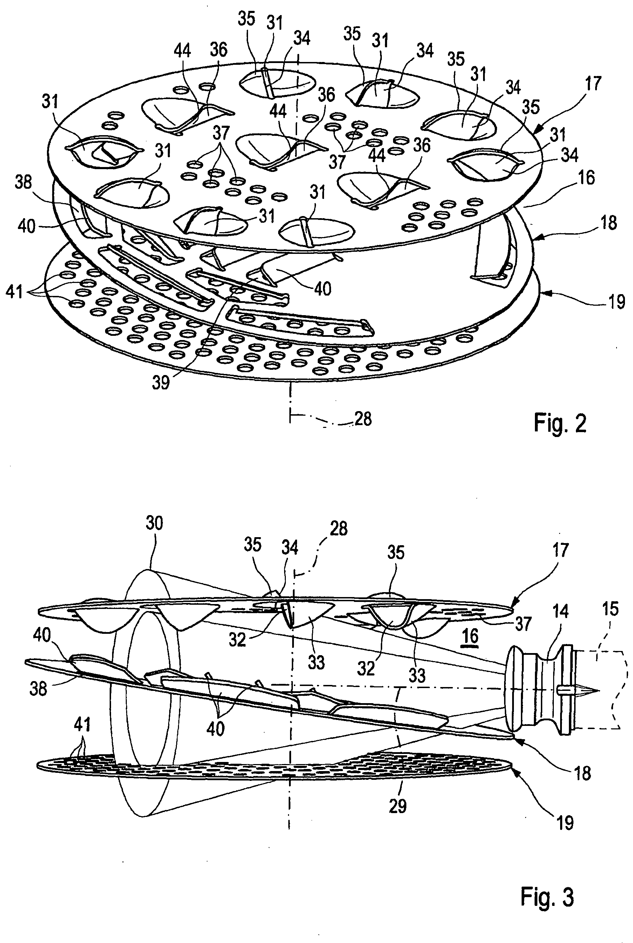

Entsprechend den Fig. 1 bis 4 umfasst ein derartiger Injektionsabschnitt 12 einen Kanal 13 zum Führen der Abgasströmung 3. Der Kanal 13 ist hier als zylindrisches Rohrstück ausgestaltet, das gleichzeitig den mittleren Gehäuseabschnitt 6 des Gehäuses 2 der Katalysatoranordnung 1 bildet. Der Injektionsabschnitt 12 umfasst ferner einen seitlich am Kanal 13 angeordneten Injektoranschluss 14, an den ein in den Fig. 1 und 3 mit unterbrochener Linie angedeuteter Injektor 15 angeschlossen ist, um die jeweilige Flüssigkeit in die Abgasströmung 3 einspritzen zu können.

Der Kanal 13 enthält im Bereich des Injektoranschlusses 14 eine Injektionskammer 16, in die der Injektor 15 im Betrieb das Reduktionsmittel einspritzt bzw. eindüst. Die Injektionskammer 16 ist bezogen auf die Abgasströmung 3 stromauf des Injektoranschlusses 14 durch eine erste Trennwand 17 und stromab des Injektoranschlusses 14 durch eine zweite Trennwand 18 begrenzt. Bei der hier gezeigten, bevorzugten Ausführungsform ist außerdem rein optional eine dritte Trennwand 19 vorgesehen, die stromab der zweiten Trennwand 18 im Kanal 13 angeordnet ist. Bei den Trennwänden 17, 18, 19 handelt es sich dabei um separate Bauteile, die zweckmäßig jeweils als Blechformkörper ausgestaltet sind. Die Trennwände 17, 18, 19 erstrecken sich jeweils über den gesamten Querschnitt des Kanals 13, sie sind perforiert und dementsprechend von der Abgasströmung 3 durchströmbar.

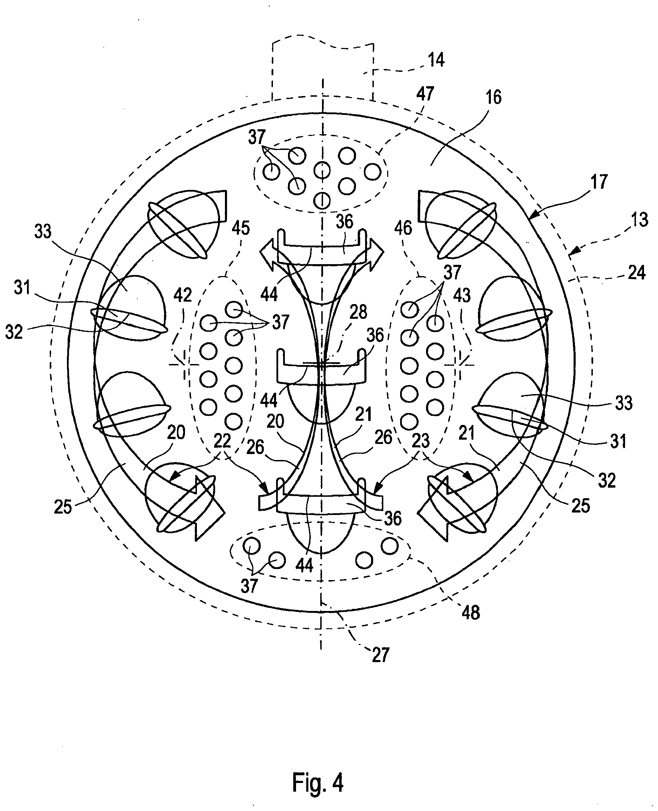

Eine nicht näher bezeichnete Perforation der ersten Trennwand 17 ist dabei so ausgestaltet, dass sie bei einer Durchströmung der ersten Trennwand 17 zumindest zwei Abgasteilströme 20, 21 erzeugt, die in Fig. 4 durch Pfeile angedeutet sind. Dabei werden diese Abgasteilströme 20, 21 so erzeugt, dass sie in der Injektionskammer 16 zwei separate und gegenläufige Strömungswirbel 22 bzw. 23 ausbilden. Durch die Strömungswirbel 22, 23 strömen die beiden Abgasteilströme 20, 21 in einem proximal zu einer Kanalwand 24 verlaufenden Bereich 25 separat voneinander, während sie in einem distal zur Kanalwand 24 verlaufenden Bereich 26 weitgehend gemeinsam strömen. Die Kanalwand 24 begrenzt die Injektionskammer 16 seitlich, erstreckt sich in der Umfangsrichtung und bildet dadurch den Kanal 13. Die beiden Strömungswirbel 22, 23 rotieren dabei um separate Wirbelachsen 42, 43, die parallel zueinander verlaufen.

Die Perforation der ersten Trennwand 17 ist bezüglich einer Längsmittelebene 27 des Kanals 13 symmetrisch, insbesondere spiegelsymmetrisch, ausgestaltet. Die Längsmittelebene 27 enthält eine Längsmittelachse 28 des Kanals 13, die innerhalb der Katalysatoranordnung 1 mit der Längsmittelachse 7 des Gehäuses 2 zusammenfällt. Durch die Symmetrie der Perforation der ersten Trennwand 17 werden auch die beiden Strömungswirbel 22, 23 symmetrisch zur Längsmittelebene 27 ausgebildet. Bevorzugt erstrecken sich die Wirbelachsen 42, 43 parallel zur Längsmittelachse 28 des Kanals 13. Die erste Trennwand 17 ist im Kanal 13 bevorzugt so angeordnet, dass sich der Injektoranschluss 14 in der Längsmittelebene 27, also in der Symmetrieebene der ersten Trennwand 17 befindet. Zur Veranschaulichung ist in Fig. 4 die Position des Injektoranschlusses 14 mit unterbrochener Linie angedeutet. Vorzugsweise liegt eine in Fig. 3 angedeutete Haupteinspritzrichtung 29 eines Einspritzstrahls 30 des Injektors 15 in der Längsmittelebene 27. Der Einspritzstrahl 30 ist hier kegelförmig konzipiert, so dass auch von einem Einspritzkegel gesprochen werden kann. Es ist klar, dass für den Einspritzstrahl 30 auch beliebige andere Geometrien realisierbar sind.

Ferner ist die symmetrische erste Trennwand 17 im Kanal 13 so positioniert, dass die beiden Abgasteilströme 20, 21 proximal zur Kanalwand 24, also in den proximalen Bereichen 25 jeweils vom Injektoranschluss 14 wegströmen, während sie in distalen Bereichen 26 gemeinsam auf den Injektoranschluss 14 zuströmen.

Wie sich insbesondere den Fig. 2 bis 4 entnehmen lässt, besitzt die Perforation der ersten Trennwand 17 zum Erzeugen der Strömungswirbel 22, 23 erste Öffnungen 31, die proximal zur Kanalwand 24 angeordnet sind und die in der Injektionskammer 16, also an einer Abströmseite der ersten Trennwand 17 jeweils eine vom Injektoranschluss 14 abgewandte Austrittsfläche 32 besitzen. Die Austrittsflächen 32 sind dabei mittels integral an der ersten Trennwand 17 ausgebildete Wandabschnitte 33 geformt, die von der übrigen ersten Trennwand 17 in die Injektionskammer 16 vorstehen. Ferner besitzen diese erste Öffnungen 31 an einer von der Injektionskammer 16 abgewandten Anströmseite der ersten Trennwand 17 jeweils eine dem Injektoranschluss 14 zugewandte Eintrittsfläche 34. Diese sind mit Hilfe von Wandabschnitten 35 gebildet, die ebenfalls integral an der ersten Trennwand 17 ausgeformt sind und die an der Anströmseite von der übrigen ersten Trennwand 17 abstehen.

Wie sich den Fig. 2 und 4 entnehmen lässt, besitzt die Perforation der ersten Trennwand 17 außerdem weitere oder zweite Öffnungen 36, die ebenfalls über dem Injektoranschluss 14 zugewandte Eintrittsflächen und vom Injektoranschluss 14 abgewandte Austrittsflächen verfügen. Dabei befinden sich auch hier die Eintrittsflächen an der von der Injektionskammer 16 abgewandten Seite, während die Austrittsflächen innerhalb der Injektionskammer 16 angeordnet sind. Während sich die ersten Öffnungen 31 proximal zur Kanalwand 13 in der Umfangsrichtung verteilt erstrecken, sind die zweiten Öffnungen 36 distal zur Kanalwand 24 geradlinig hintereinander angeordnet, und zwar bevorzugt in der Längsmittelebene 27.

Wie sich den Fig. 2 und 4 ferner entnehmen lässt, kann die Perforation der ersten Trennwand 17 außerdem andere oder dritte Öffnungen 37 aufweisen, die parallel zur Längsmittelachse 28 des Kanals 13 durchströmbar sind und dadurch in der Injektionskammer 16 axiale Teilströme erzeugen. Sämtliche dritte Öffnungen 37 liegen in der Ebene der ersten Trennwand 17.

Einige der dritten Öffnungen 37 sind dabei distal zur Kanalwand 24 zwischen den ersten Öffnungen 31 und den zweiten Öffnungen 36 angeordnet. Ferner sind diese dritten Öffnungen 37 in zwei separaten Bereichen angeordnet, nämlich in einem ersten Bereich 45 und in einem zweiten Bereich 46. Durch den ersten Bereich 45 erstreckt sich eine Wirbelachse 42 des ersten Strömungswirbels 22, um die der erste Strömungswirbel rotiert. Durch den zweiten Bereich 46 erstreckt sich eine zweite Wirbelachse 43 des zweiten Strömungswirbels 23, um die der zweite Strömungswirbel 23 rotiert. Weitere dritte Öffnungen 37 liegen in einem zum Injektoranschluss 14 proximalen Bereich 47 und weitere dritte Öffnungen liegen in einem zum Injektoranschluss 14 distalen Bereich 48. Die dritten Öffnungen 37 des proximalen Bereichs 47 unterstützen die Separation der beiden Abgasteilströme, um jeweils einen wandnahen Strömungsbereich 25 des jeweiligen Strömungswirbels 22, 23 zu bilden. Die dritten Öffnungen 37 des distalen Bereichs 48 verhindern eine Wiedervereinigung der beiden aufeinander zu strömenden wandnahen Strömungsbereiche 25 und unterstützen dadurch die Ausbildung der wandfernen bzw. zentralen Rückströmbereiche 26 der Strömungswirbel 22, 23. Die dritten Öffnungen 37 der zentralen Bereiche 45 und 46 trennen die wandnahen Strömungsbereiche 25 von den wandfernen Strömungsbereichen 26 und stabilisieren dadurch die beiden Strömungswirbel 22, 23.

Gemäß den Fig. 2 und 3 kann die nicht näher bezeichnete Perforation der zweiten Trennwand 18 erste und zweite Öffnungen 38 und 39 umfassen, die jeweils mit Leitflächen 40 abgeschirmt sind. Die Leitflächen 40 stehen dabei jeweils in die Injektionskammer 16 vor. Die ersten Öffnungen 38 sind dabei proximal zur Kanalwand 24 angeordnet. Sie sind länglich und erstrecken sich im Wesentlichen in der Umfangsrichtung. Sie sind durch die Leitflächen 40 nach innen abgeschirmt. Im Unterschied dazu sind die zweiten Öffnungen 40 distal zur Kanalwand 24 angeordnet und mit Hilfe der Leitflächen 40 an einer dem Injektoranschluss 14 zugewandten Seite abgeschirmt. Die zweiten Öffnungen 39 sind ebenfalls länglich, dafür geradlinig und verlaufen dabei parallel zueinander. Die geradlinigen, länglichen zweiten Öffnungen 39 erstrecken sich dabei quer zur Längsmittelebene 27. Die zweite Trennwand 18 ist ebenfalls spiegelsymmetrisch zur Längsmittelebene 27 ausgestaltet; sie unterscheidet sich jedoch von der ersten Trennwand 17.

Die nur optional vorgesehene dritte Trennwand 19 enthält nur eine Art von Öffnungen 41, die jeweils in der Ebene der dritten Trennwand 19 liegen und die im gezeigten Beispiel eine gleichförmige Perforation definieren. Die dritte Trennwand 19 ist dabei zweckmäßig ein einfaches Lochblech. Die dritte Trennwand 19 ist somit insbesondere verschieden zur ersten Trennwand 17 und zur zweiten Trennwand 18 ausgestaltet. Auch hier ist denkbar eine ungleichförmige Perforation vorzusehen, also eine Perforation, die verschiedene Öffnungen mit und/oder ohne Abdeckungen und/oder Leitflächen.

Die drei Trennwände 17, 18, 19 sind jeweils grundsätzlich eben konfiguriert, wobei bei der ersten Trennwand 17 und bei der zweiten Trennwand 18 integrale Abschnitte der jeweiligen Trennwand 17, 18 umgeformt und ausgestellt werden können, um die einzelnen Öffnungen bzw. die Strömungsleitkonturen zu bilden.

Die erste Trennwand 17 erstreckt sich im Wesentlichen senkrecht zur Längsmittelachse 28 des Kanals 13. Auch die dritte Trennwand 19 erstreckt sich zweckmäßig quer zur Längsmittelachse 28 und somit parallel zur ersten Trennwand 17. Im Unterschied dazu verläuft die zweite Trennwand 18 geneigt zu der ersten Trennwand 17 und somit auch geneigt zur dritten Trennwand 19. Die Neigung der ersten Trennwand 17 zur zweiten Trennwand 18 ist dabei derart, dass sich die Injektionskammer 17 mit zunehmendem Abstand vom Injektoranschluss 14 verjüngt.

## Patentansprüche

1. Injektionsabschnitt einer Abgasanlage für eine Brennkraftmaschine,
- mit einem Kanal (13) zum Führen einer Abgasströmung (3),
- mit einem seitlich am Kanal (13) angeordneten Injektoranschluss (14), an den ein Injektor (15) zum Einbringen einer Flüssigkeit oder eines Gases in die Abgasströmung (3) anschließbar ist,
- mit einer im Kanal (13) im Bereich des Injektoranschlusses (14) ausgebildeten Injektionskammer (16), die einerseits durch eine bezüglich der Abgasströmung (3) stromauf des Injektoranschlusses (14) im Kanal (13) angeordnete, perforierte und von der Abgasströmung (3) durchströmbare erste Trennwand (17) und andererseits durch eine bezüglich der Abgasströmung (3) stromab des Injektoranschlusses (14) im Kanal (13) angeordnete, perforierte und von der Abgasströmung (3) durchströmbare zweite Trennwand (18) begrenzt ist,
- wobei eine Perforation der ersten Trennwand (17) so ausgestaltet ist, dass sie bei einer Durchströmung der ersten Trennwand (17) innerhalb der Injektionskammer (16) wenigstens zwei Abgasteilströme (20, 21) erzeugt, die zwei gegenläufige Strömungswirbel (22, 23) ausbilden,
- wobei die beiden Abgasteilströme (20, 21) proximal zu einer die Injektionskammer (16) seitlich begrenzenden Kanalwand (24) separat strömen und distal zur Kanalwand (24) gemeinsam strömen,
- wobei die Perforation der ersten Trennwand (17) zum Erzeugen der Strömungswirbel (22, 23) erste Öffnungen (31) aufweist, die proximal zur Kanalwand (24) angeordnet sind und die in der Injektionskammer (16) jeweils eine vom Injektoranschluss (14) abgewandte Austrittsfläche (32) besitzen,
- wobei die Austrittsflächen (32) mittels integraler Wandabschnitte (33) der ersten Trennwand (17) gebildet sind, die von der übrigen ersten Trennwand (17) in die Injektionskammer (16) vorstehen,
- wobei die ersten Öffnungen (31) an einer von der Injektionskammer (16) abgewandten Anströmseite der ersten Trennwand (17) jeweils eine dem Injektoranschluss (14) zugewandte Eintrittsfläche (34) aufweisen,
- wobei die Eintrittsflächen (34) mittels integraler Wandabschnitte (35) der ersten Trennwand (17) gebildet sind, die an der Anströmseite von der übrigen ersten Trennwand (17) abstehen,
- wobei die erste Trennwand (17) ein ebener Blechkörper ist, aus dem die integralen Wandabschnitte zum Bilden der ersten Öffnungen (31) ausgestellt sind.

2. Injektionsabschnitt nach Anspruch 1,
**dadurch gekennzeichnet,**
**dass** die Perforation der ersten Trennwand (17) symmetrisch zu einer Längsmittelebene (27) des Kanals (13) ausgestaltet ist, so dass sich bei einer Durchströmung der ersten Trennwand (17) die beiden Strömungswirbel (22, 23) symmetrisch zur Längsmittelebene (27) ausbilden.

3. Injektionsabschnitt nach Anspruch 2,
**dadurch gekennzeichnet,**
**dass** der Injektoranschluss (14) in dieser Längsmittelebene (27) angeordnet ist.

4. Injektionsabschnitt nach einem der Ansprüche 1 bis 3,
**dadurch gekennzeichnet,**
**dass** die beiden Abgasteilströme (20, 21) proximal zur Kanalwand (24) jeweils vom Injektoranschluss (14) wegströmen und distal zur Kanalwand (24) gemeinsam auf den Injektoranschluss (14) zuströmen.

5. Injektionsabschnitt nach einem der Ansprüche 1 bis4,
**dadurch gekennzeichnet,**
**dass** die Perforation der ersten Trennwand (17) zum Erzeugen der Strömungswirbel (22, 23) außerdem zweite Öffnungen (36) aufweist, die distal zur Kanalwand (24) angeordnet sind und die in der Injektionskammer (16) jeweils eine dem Injektoranschluss (14) zugewandte Eintrittsfläche (44) besitzen.

6. Injektionsabschnitt nach einem der Ansprüche 1 bis 5,
**dadurch gekennzeichnet,**
**dass** die Perforation der ersten Trennwand (17) zum Erzeugen der Strömungswirbel (22, 23) außerdem dritte Öffnungen (37) aufweist, die parallel zu einer Längsmittelachse (28) des Kanals (13) durchströmbar sind.

7. Injektionsabschnitt nach den Ansprüchen 5 und 6,
**dadurch gekennzeichnet,**
**dass** zumindest einige der dritten Öffnungen (37) zwischen den ersten Öffnungen (31) und den zweiten Öffnungen (36) angeordnet sind.

8. Injektionsabschnitt nach Anspruch 6 oder 7,
**dadurch gekennzeichnet,**
**dass** die dritten Öffnungen (37) in der Ebene der ersten Trennwand (17) liegen.

9. Injektionsabschnitt nach einem der Ansprüche 6 bis 8,
**dadurch gekennzeichnet,**
- **dass** einige oder alle der dritten Öffnungen (37) in zwei separaten Bereichen (45, 46) angeordnet sind, durch die sich jeweils eine Wirbelachse (42, 43) erstreckt, um die der jeweilige Strömungswirbel (22, 23) rotiert, und/oder
- **dass** einige der dritten Öffnungen (37) in einem zum Injektoranschluss (14) proximalen Bereich (47) und/oder in einem zum Injektoranschluss (14) distalen Bereich (48) angeordnet sind.

10. Injektionsabschnitt nach einem der Ansprüche 1 bis 9,
**dadurch gekennzeichnet,**
**dass** eine Perforation der zweiten Trennwand (18) Öffnungen (38, 39) aufweist, die mit Leitflächen (40) abgeschirmt sind, die in die Injektionskammer (16) vorstehen.

11. Injektionsabschnitt nach Anspruch 10,
**dadurch gekennzeichnet,**
- **dass** die Öffnungen der Perforation der zweiten Trennwand (18) erste Öffnungen (38) aufweisen, die proximal zur Kanalwand (24) angeordnet sind, die länglich sind, die sich im Wesentlichen in der Umfangsrichtung erstrecken und die nach radial innen durch die jeweilige Leitfläche (40) abgeschirmt sind, und/oder
- **dass** die Öffnungen der Perforation der zweiten Trennwand (18) zweite Öffnungen (39) aufweisen, die distal zur Kanalwand (24) angeordnet sind und die zum Injektoranschluss (14) mit der jeweiligen Leitfläche (40) abgeschirmt sind.

12. Injektionsabschnitt nach einem der Ansprüche 1 bis 11,
**dadurch gekennzeichnet,**
**dass** die zweite Trennwand (18) relativ zu ersten Trennwand (17) geneigt ist, derart, dass sich die Injektionskammer (16) mit zunehmendem Abstand vom Injektoranschluss (14) verjüngt.

13. Injektionsabschnitt nach einem der Ansprüche 1 bis 12,
**dadurch gekennzeichnet,**
**dass** eine perforierte, von der Abgasströmung (3) durchströmbare dritte Trennwand (19) vorgesehen ist, die bezüglich der Abgasströmung (3) stromab der zweiten Trennwand (18) angeordnet ist.

14. Katalysatoranordnung für eine Abgasanlage einer Brennkraftmaschine,
- mit einem rohrförmigen Gehäuse (2) zum Führen einer Abgasströmung (3), das in einem Auslassabschnitt (5) einen SCR-Katalysator (11) enthält,
- mit einem Injektionsabschnitt (12) nach einem der Ansprüche 1 bis 13, der bezüglich der Abgasströmung (3) stromauf des SCR-Katalysators (11) angeordnet ist.

## Claims

1. Injection section of an exhaust gas system for an internal combustion engine
- with a channel (13) for conveying an exhaust gas flow (3),
- with an injector connection (14) which is laterally arranged on the channel (13) and to which an injector (15) for introducing a fluid or a gas into the exhaust gas flow (3) can be connected,
- with an injection chamber (16) which is formed in the channel (13) in the area of the injector connection (14) and which is delimited on the one hand by a perforated first dividing wall (17) through which the exhaust gas flow (3) passes and which is arranged in the channel (13) upstream of the injector connection (14) with regard to the exhaust gas flow (3), and on the other hand by a perforated second dividing wall (18) through which the exhaust gas flow (3) passes and which is arranged in the channel (13) downstream of the injector connection (14) with regard to the exhaust gas flow (3)
- wherein a perforation of the first dividing wall (17) is designed in such a way that when a flow passes through the first dividing wall (17) within the injection chamber (16) it produces at least two partial exhaust gas flows (20, 21), which create the two counter-rotating flow vortices (22, 23),
- wherein the two partial exhaust gas flows (20, 21) separately flow proximally to a channel wall (24) laterally delimiting the injection chamber (16) and jointly flow distally to the channel wall (24),
- wherein for generating the flow vortices (22, 23) the perforation of the first dividing wall (17) has first openings (31) which are arranged proximally to the channel wall (24) and which each have an outlet area (32) facing away from the injector connection (14) in the injection chamber (16),
- wherein the outlet areas (32) are formed by means of integral wall sections (33) of the first dividing wall (17) which project from the other first dividing wall (17) into the injection chamber (16),
- wherein the first openings (31) each have an inlet area (34) facing the injector connection (14) on an inflow side of the first dividing wall (17) facing away from the injection chamber (16),
- wherein the inlet areas (34) are formed by means of integral wall sections (35) of the first dividing wall (17) which protrude from the other first dividing wall (17) on the inflow side,
- - wherein the first dividing wall (17) is a planar sheet metal body from which the integral wall sections are produced to form the first openings (31).

2. Injection section according to claim 1
**characterised in that**
the perforation of the first dividing wall (17) is designed symmetrically to a longitudinal central plane (27) of the channel (13) so that on flowing through the first dividing wall (17) the two flow vortices (23, 23) form symmetrically to the longitudinal central plane (27).

3. Injection section according to claim 2
**characterised in that**
the injector connection (14) is arranged in this longitudinal central plane (27).

4. Injection section according to any one of claims 1 to 3
**characterised in that**
proximally to the channel wall (24) both partial exhaust gas flows (20, 21) flow away from the injector connection (14) and distally to the channel wall (24) jointly flow towards the injector connection (14).

5. Injection section according to any one of claims 1 to 4
**characterised in that**
for generating the flow vortices (22, 23) the perforation of the first dividing wall (17) also has second openings (36) which are arranged distally to the channel wall (24) and which in the injection chamber (16) each have an inlet surface (44) facing the injector connection (14).

6. Injection section according to any one of claims 1 to 5
**characterised in that**
for generating the flow vortices (22, 23) the dividing wall (17) also has third openings (37) through which a flow can pass in parallel to a longitudinal central axis (28) of the channel (13).

7. Injection section according to claims 5 and 6
**characterised in that**
at least some of the third openings (37) are arranged between the first openings (31) and the second openings (36).

8. Injection section according to claim 6 or 7
**characterised in that**
the third openings (37) are in the plane of the first dividing wall (17).

9. Injection section according to any one of claims 6 to 8
**characterised in**
- **that** some or all of the third openings (37) are arranged in two separate areas (45, 46) which each extend through one vortex axis (42, 43) around which the corresponding flow vortex (22, 23) rotates, and/or
- **that** some of the third openings (37) are arranged in an area (47) proximal to the injector connection (14) and/or in an area (48) distal to the injector connection (14).

10. Injection section according to any one of claims 1 to 9
**characterised in that**
a perforation of the second dividing wall (18) has openings (38, 39) which are screened with guide surfaces (40) which project into the injection chamber (16).

11. Injection section according to claim 10
**characterised in**
- **that** the openings of the perforation of the second dividing wall (18) have first openings (38) which are arranged proximally to the channel wall (24), are elongated, essentially extend in the circumferential direction and are screened radially inwards by the corresponding guide surface (40) and/or
- **that** the openings of the perforation of the second dividing wall (18) have second openings (39) which are arranged distally of the channel wall (24) and are screened off from the injection connection (14) with the corresponding guide surface (40).

12. Injection section according to any one of claims 1 to 11
**characterised in that**
the second dividing wall (18) is inclined relative to the first dividing wall (17) in such a way that the injection chamber (16) tapers with increasing distance from the injector connection (14).

13. Injection section according to any one of claims 1 to 12
**characterised in that**
a perforated third dividing wall (19) is provided through which the exhaust gas flow (3) can pass and which is arranged downstream of the second dividing wall (18) in the direction of flow of the exhaust gas (3).

14. Catalytic converter arrangement for an exhaust gas system of an internal combustion engine
- with a tubular housing (2), for conveying an exhaust gas flow (3), which in an outlet section (5) contains an SCR catalytic converter (11),
- with an injection section (12) according to any one of claims 1 to 13, which relative to the exhaust gas flow (3) is arranged upstream of the SCR catalytic converter (11).

## Revendications

1. Section d'injection d'un système de gaz d'échappement pour un moteur à combustion interne,
- avec un canal (13) pour guider un flux de gaz d'échappement (3),
- avec un raccord d'injecteur (14) qui est agencé latéralement sur le canal (13) et auquel peut être raccordé un injecteur (15) pour introduire un liquide ou un gaz dans le flux de gaz d'échappement (3),
- avec une chambre d'injection (16) qui est conçue dans le canal (13) dans la zone du raccord d'injecteur (14) et qui est délimitée d'une part par une première paroi séparatrice (17) qui est agencée dans le canal (13) en amont du raccord d'injecteur (14) par rapport au flux de gaz d'échappement (3), qui est perforée et qui peut être traversée par le flux de gaz d'échappement (3) et d'autre part par une deuxième paroi séparatrice (18) qui est agencée dans le canal (13) en aval du raccord d'injecteur (14) par rapport au flux de gaz d'échappement (3), qui est perforée et qui peut être traversée par le flux de gaz d'échappement (3),
- dans laquelle une perforation de la première paroi séparatrice (17) est conçue de telle sorte qu'elle produit, lors d'une traversée de la première paroi séparatrice (17), à l'intérieur de la chambre d'injection (16), au moins deux flux partiels de gaz d'échappement (20, 21) qui créent deux tourbillons de sens contraire (22, 23),
- dans laquelle les deux flux partiels de gaz d'échappement (20, 21) s'écoulent séparément dans la zone proximale par rapport à une paroi de canal (24) délimitant latéralement la chambre d'injection (16) et ensemble dans la zone distale par rapport à la paroi de canal (24),
- dans laquelle, pour produire les tourbillons (22, 23), la perforation de la première paroi séparatrice (17) comporte des premières ouvertures (31) qui sont agencées dans la zone proximale par rapport à la paroi de canal (24) et qui ont dans la chambre d'injection (16) chacune une surface de sortie (32) tournée à l'opposé du raccord d'injecteur (14),
- dans laquelle les surfaces de sortie (32) sont formées au moyen de sections de paroi intégrales (33) de la première paroi séparatrice (17) qui font saillie de la première paroi séparatrice restante (17) dans la chambre d'injection (16),
- dans laquelle les premières ouvertures (31) comportent chacune une surface d'entrée (34) tournée vers le raccord d'injecteur (14) sur un côté amont de la première paroi séparatrice (17) opposé à la chambre d'injection (16),
- dans laquelle les surfaces d'entrée (34) sont formées au moyen de sections de paroi intégrales (35) de la première paroi séparatrice (17) qui sont éloignées de la première paroi séparatrice restante (17) sur le côté amont,
- dans laquelle la première paroi séparatrice (17) est un corps de tôle plat à partir duquel les sections de paroi intégrales sont exposées pour former les premières ouvertures (31).

2. Section d'injection selon la revendication 1, **caractérisée en ce que** la perforation de la première paroi séparatrice (17) est conçue symétrique par rapport à un plan médian longitudinal (27) du canal (13) de telle sorte que, lors d'une traversée de la première paroi séparatrice (17), les deux tourbillons (22, 23) se créent symétriquement par rapport au plan médian longitudinal (27).

3. Section d'injection selon la revendication 2, **caractérisée en ce que** le raccord d'injecteur (14) est agencé dans ce plan médian longitudinal (27).

4. Section d'injection selon l'une des revendications 1 à 3, **caractérisée en ce que** les deux flux partiels de gaz d'échappement (20, 21) s'écoulent, dans la zone proximale par rapport à la paroi de canal (24), chacun de manière à s'éloigner du raccord d'injecteur (14) et, dans la zone distale par rapport à la paroi de canal (24), ensemble de manière à se rapprocher du raccord d'injecteur (14).

5. Section d'injection selon l'une quelconque des revendications 1 à 4, **caractérisée en ce que**, pour produire les tourbillons (22, 23), la perforation de la première paroi séparatrice (17) comporte en outre des deuxièmes ouvertures (36) qui sont agencées dans la zone distale par rapport à la paroi de canal (24) et qui ont dans la chambre d'injection (16) chacune une surface de d'entrée (44) tournée en direction du raccord d'injecteur (14).

6. Section d'injection selon l'une quelconque des revendications 1 à 5, **caractérisée en ce que**, pour produire les tourbillons (22, 23), la perforation de la première paroi séparatrice (17) comporte en outre des troisièmes ouvertures (37) qui peuvent être traversées parallèlement à un axe médian longitudinal (28) du canal (13).

7. Section d'injection selon les revendications 5 et 6, **caractérisée en ce qu'**au moins quelques-unes des troisièmes ouvertures (37) sont agencées entre les premières ouvertures (31) et les deuxièmes ouvertures (36).

8. Section d'injection selon la revendication 6 ou 7, **caractérisée en ce que** les troisièmes ouvertures (37) se trouvent dans le plan de la première paroi séparatrice (17).

9. Section d'injection selon l'une des revendications 6 à 8, **caractérisée en ce que**
- quelques-unes des troisièmes ouvertures ou toutes les troisièmes ouvertures (37) sont agencées dans deux zones séparées (45, 46) à travers lesquelles s'étend respectivement un axe de tourbillon (42, 43) autour duquel tourne le tourbillon (22, 23) respectif,
et/ou
- quelques-unes des troisièmes ouvertures (37) sont agencées dans une zone proximale (47) par rapport au raccord d'injecteur (14) et/ou dans une zone distale (48) par rapport au raccord d'injecteur (14).

10. Section d'injection selon l'une des revendications 1 à 9, **caractérisée en ce qu'**une perforation de la deuxième paroi séparatrice (18) comporte des ouvertures (38, 39) qui sont protégées avec des surfaces de guidage (40) qui dépassent dans la chambre d'injection (16).

11. Section d'injection selon la revendication 10, **caractérisée en ce que**
- les ouvertures de la perforation de la deuxième paroi séparatrice (18) comportent des premières ouvertures (38) qui sont agencées dans la zone proximale par rapport à la paroi de canal (24), qui sont allongées, qui s'étendent globalement dans la direction circonférentielle et qui sont protégées de façon radiale vers l'intérieur par la surface de guidage (40) respective,
et/ou
- les ouvertures de la perforation de la deuxième paroi séparatrice (18) comportent des deuxièmes ouvertures (39) qui sont agencées dans la zone distale par rapport à la paroi de canal (24) et qui sont protégées par rapport au raccord d'injecteur (14) avec la surface de guidage (40) respective.

12. Section d'injection selon l'une des revendications 1 à 11, **caractérisée en ce que** la deuxième paroi séparatrice (18) est inclinée par rapport à la première paroi séparatrice (17) de telle sorte que la chambre d'injection (16) se rétrécit lorsque la distance au raccord d'injecteur (14) augmente.

13. Section d'injection selon l'une des revendications 1 à 12, **caractérisée en ce qu'**il est prévu une troisième paroi séparatrice (19) perforée qui peut être traversée par le flux de gaz d'échappement (3) et qui est agencée en aval de la deuxième paroi séparatrice (18) par rapport au flux de gaz d'échappement (3).

14. Dispositif catalytique pour un système de gaz d'échappement d'un moteur à combustion interne
- avec un carter tubulaire (2) qui est destiné à guider un flux de gaz d'échappement (3) et qui contient un catalyseur à réduction catalytique sélective RCS (11) dans une section de sortie (5),
- avec une section d'injection (12) selon l'une des revendications 1 à 13 qui est agencée en amont du catalyseur RCS (11) par rapport au flux de gaz d'échappement (3).
